Europäisches Patentamt

European Patent Office

Office européen des brevets

(11) Publication number: **0 214 297 B1**

# EUROPEAN PATENT SPECIFICATION

(45) Date of publication of patent specification: **09.09.92**   (51) Int. Cl.⁵: **G06F 1/00**

(21) Application number: **86901482.9**

(22) Date of filing: **12.02.86**

(86) International application number:
**PCT/JP86/00058**

(87) International publication number:
**WO 86/05013 (28.08.86 86/19)**

(54) **SYSTEM OF CONTROLLING COOLING SYSTEM FOR ELECTRONIC DEVICES.**

(30) Priority: **22.02.85 JP 35053/85**

(43) Date of publication of application:
**18.03.87 Bulletin 87/12**

(45) Publication of the grant of the patent:
**09.09.92 Bulletin 92/37**

(84) Designated Contracting States:
**CH DE FR GB IT LI NL SE**

(56) References cited:
**DE-A- 2 455 030**
**DE-A- 3 317 871**
**US-A- 4 479 115**

(73) Proprietor: **FUJITSU LIMITED**
**1015, Kamikodanaka Nakahara-ku**
**Kawasaki-shi Kanagawa 211(JP)**

(72) Inventor: **TAKEMAE, Motohiro**
**5-203, 1260, Shobuzawa**
**Fujisawa-shi Kanagawa 252(JP)**
Inventor: **OKADA, Tsuguo**
**4-16-51, Azamino Midori-ku**
**Yokohama-shi Kanagawa 227(JP)**
Inventor: **YAMAMOTO, Haruhiko**
**4-710, 316-6, Mamedocho Kohoku-ku**
**Yokohama-shi Kanagawa 222(JP)**

(74) Representative: **Sunderland, James Harry et al**
**HASELTINE LAKE & CO Hazlitt House 28**
**Southampton Buildings Chancery Lane**
**London WC2A 1AT(GB)**

## Description

The present invention relates to cooling for electronic apparatus. The present invention is concerned with a cooling system which serves to cool the interior of an electronic apparatus such as an information processing apparatus, etc., using a plurality of cooling fans, and is particularly concerned with improvement in the control system used to control the rates of rotation of the cooling fans in accordance with heat generated by the electronic apparatus.

Heat generated within an electronic apparatus exercises very considerable influence on parts of electronic circuits in the apparatus and in particular can result not only in deterioration of performance but also breakdown of semiconductor elements in a semiconductor integrated circuit comprising semiconductor elements which determine the performance of the electronic apparatus, as is well known.

In general, a method of exhausting heat generated within the apparatus to the exterior of apparatus is employed which uses a cooling fan or an external air supply into the apparatus, for cooling the inside of apparatus.

However, if temperature conditions within the apparatus depend on normal rotation of such a cooling fan, and if the cooling fan fails and ceases rotation, the internal temperature of apparatus certainly rises quickly and the result may be the breakdown of semiconductor elements, etc., in the apparatus.

Accordingly, a plurality of cooling fans are usually provided in order to prevent rapid temperature rise within the apparatus due to occurrence of a failure in a cooling fan, and the apparatus is caused to cease operations by turning OFF the power supply to the apparatus before the interior of the apparatus reaches a risky temperature.

If power supply is turned OFF during operation of the apparatus, a considerable time is lost until restart of operations by resetting a power switch.

Therefore, a cooling system for electronic apparatus is desired which can avoid as far as possible interruption of electrical power supply to the apparatus as a result of failure of a cooling fan and which is capable of keeping the apparatus operating safely.

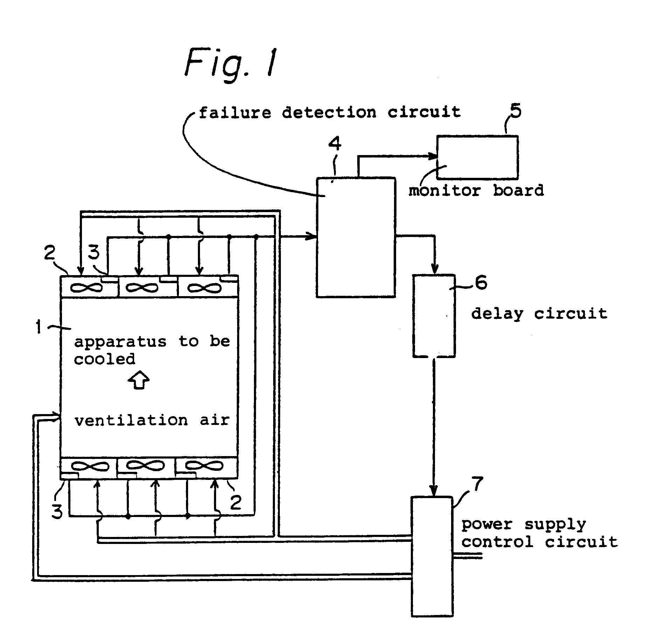

Fig. 1 is an example of a cooling system control circuit of a typical electronic apparatus of the prior art.

Apparatus 1 is the object to be cooled, and heat generated within the apparatus is exhausted by a plurality of cooling fans 2. Each cooling fan 2 is provided, for example, with a wind sensor 3 which senses flow of air or ventilation and it is connected to a failure detection circuit 4.

In an exemplary wind sensor 3 structure, a heater and a heat-sensitive element are paired. When the fan rotates normally, assuring ventilation, heat generated from the heater is always exhausted but if ventilation is reduced, heat generated from the heater accumulates and a signal issued from the heat-sensitive element changes.

If a cooling fan 2 has lost the capability for ventilation, for example due to overheating of a fan motor or entry of foreign matter into the rotating portion of the fan, or if ventilation capability is reduced, the failure detection circuit 4 detects failure of the cooling fan from the change in level of the signal sent from the wind sensor 3.

The failure detection circuit 4 displays a warning that a cooling fan has failed at a monitor board 5 and meanwhile sends a power supply OFF signal to a power supply control circuit 7 after a period preset by a delay circuit 6.

Within this period, data required for stopping operations is saved and the power supply of the apparatus is turned OFF with a power OFF signal, disabling he function of apparatus. The apparatus does not generate heat and thereby is protected from damage.

As described above, if a cooling fan stops due to a failure, the apparatus is protected from damage but it is a large disadvantage that operations of the apparatus are inevitably caused to cease. In particular, an accidental stoppage of a cooling fan, for example among a plurality of cooling fans, is a failure which it can be assumed will occur for electronic apparatus which is intended to operate continuously for a long period.

Since temperature within the apparatus is naturally influenced by external temperature, the number of cooling fans employed must be determined in consideration not only if the requirements involved in ceasing apparatus operation upon fan failure but also in consideration of the environmental temperature of the apparatus. The cooling fans are operated usually with an excess ventilation capability above an estimated sufficient safe operation level.

If external temperature is sufficiently low, ventilation is carried out pointlessly, with the disadvantages of power consumption, curtailment of the operation life of motor bearings and noise, etc.

It has been proposed that the speed of rotation of a cooling fan be controlled to minimum value in accordance with a detected load condition or temperature of an electronic apparatus (for example, JP-A-58-186998, JP-A-59-55099. However, if one of a plurality of cooling fans fails, the same procedures as described above are required and therefore operations of the apparatus must be stopped.

US-A-4 479 115 discloses monitoring of the speed of a fan to detect its failure, and also mentions using the monitor signal to control rotation speed.

It is an object of the present invention to solve the problems described above. In order to attain this object, the present invention discloses a cooling control system for electronic apparatus wherein the rates of rotation of cooling fans are reduced to provide ventilation at a minimum ventilation capability in ordinary operation, through control of the rates of rotation of the cooling fans, or all cooling fans except for a defective cooling fan are caused to rotate at full speed if a specified number of cooling fans, for example only one cooling fan, fails, or the power supply of the apparatus as a whole is turned OFF if more than a specified number of cooling fans fail, for example if two or more cooling fans fail.

Thus, according to the present invention there is provided a cooling system for electronic apparatus, comprising:-

a plurality of cooling fans, for air cooling;

a plurality of sensors, operable to sense failure of respective fans; and

control circuitry, operable to turn off power supply to the electronic apparatus in response to fan failure;

characterised in that the system further comprises,

temperature monitoring means, operable to sense either:-

(a) temperature of cooling air supplied to, or to be exhausted from, the electronic apparatus, when the electronic apparatus is directly air-cooled by the fans,

or:-

(b) temperature of cooling air supplied to, or to be exhausted from, water cooling means, when the electronic apparatus is not directly air-cooled but is water-cooled by such water cooling means,

or:-

(c) temperature of water used for cooling the electronic apparatus, when the electronic apparatus is water cooled by such water cooling means;

rotation control circuitry, operable to control rates of rotation of the fans,

failure discrimination circuitry, operable to discriminate, on the basis of outputs of the sensors, whether or not a specified number of fans, or more than the specified number of fans, has failed;

and characterised in that the system is operable so that,

in normal operation, when no fan failures are sensed, the fans are run at rates dependent upon the temperature sensed by the temperature sensing mans, whereas

upon sensing of fan failure:-

(i) if the specified number of fans, or more than the specified number of fans are discriminated by the failure discrimination circuitry to have failed, the control circuitry turns off power to the electronic apparatus, or

(ii) if less than the specified number of fans are discriminated to have failed by the failure discrimination circuitry, the non-failed fans are caused to operate at full speed.

Reference is made, by way of example, to the accompanying drawings, in which:-

Fig. 1 is a block diagram illustrating a prior art cooling system control circuit,

Fig. 2 is a block diagram illustrating an embodiment of the present invention, and

Fig. 3 is a circuit diagram illustrating details of a part of Fig. 2.

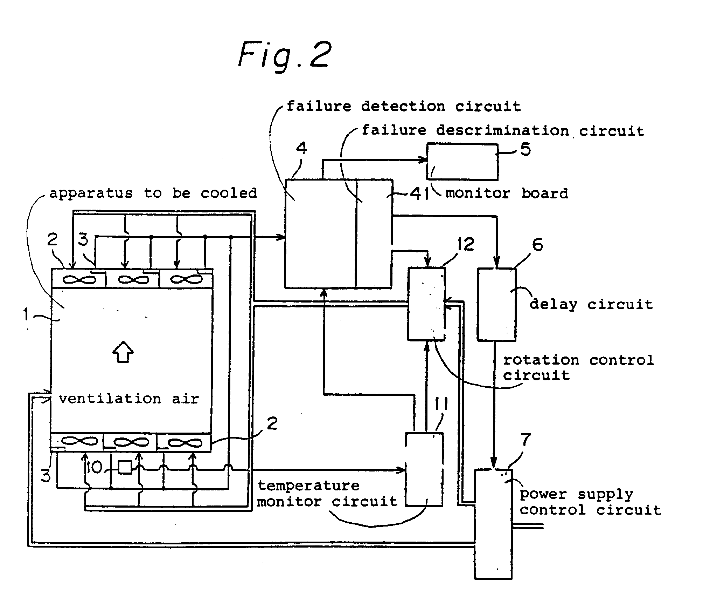

Referring to Fig. 2, under normal operating conditions, a temperature sensor 10 provided at the external air inlet side of the apparatus 1 converts an external air temperature through a temperature monitor circuit 11 and sends a signal to a rotation control circuit 12.

The temperature signal controls the rate of rotation of the cooling fans 2 to provide for adequate ventilation for the apparatus.

As the temperature sensor 10, a known sensor, for example a thermistor, may be used. The temperature sensor 10 may be provided at the exhaust side of the apparatus or within the apparatus, instead of at the air inlet side as shown in the Figure. In this embodiment, the temperature sensor 10 is provided at the air inlet side because the rate of rotation of cooling fans 2 is controlled in dependence upon the environmental temperature. This system is sufficient when heat generated by apparatus 1 is constant. If the temperature sensor is provided at the air exhaust side of the apparatus, it is impossible to accurately know the temperature condition of the apparatus as a whole, but when it is provided in the air inlet side, such problem can be solved.

If a failure occurs, a failure detection circuit 4 detects cessation of cooling fan operation, a failure discrimination circuit 41 discriminates whether or not the number of defective cooling fans is greater than a specified number of fans, namely whether only one fan has failed or whether a number of fans exceeding the specified number have failed.

When the number of defective cooling fans is within the specified number, the failure detection circuit 5 displays a warning of defective cooling fans on the monitor board 5.

Simultaneously, the rotation control circuit 12 turns OFF the power supply of a defective cooling fan, controls the rate of rotation of other, normal cooling fans to full-speed operation, in order to maintain the necessary ventilation capability by compensating for the lost ventilation capability of defective fans.

Thereby, operations of electronic apparatus can be continued.

In this case, it is also allowed that the operations may be suspended if the air temperature is sensed to be higher than a specified value by the temperature sensor 10 and sufficient ventilation cannot be expected even with full-speed operations of the normally operating cooling fans.

Meanwhile, when the failure discriminating circuit 41 discriminates that failure has occurred in more than a specified number of fans, for example, the power OFF signal is sent to the power supply control circuit 7 through a delay circuit 6. After a certain period, the power supply for the apparatus as a whole is turned OFF and thereby the apparatus ceases operations.

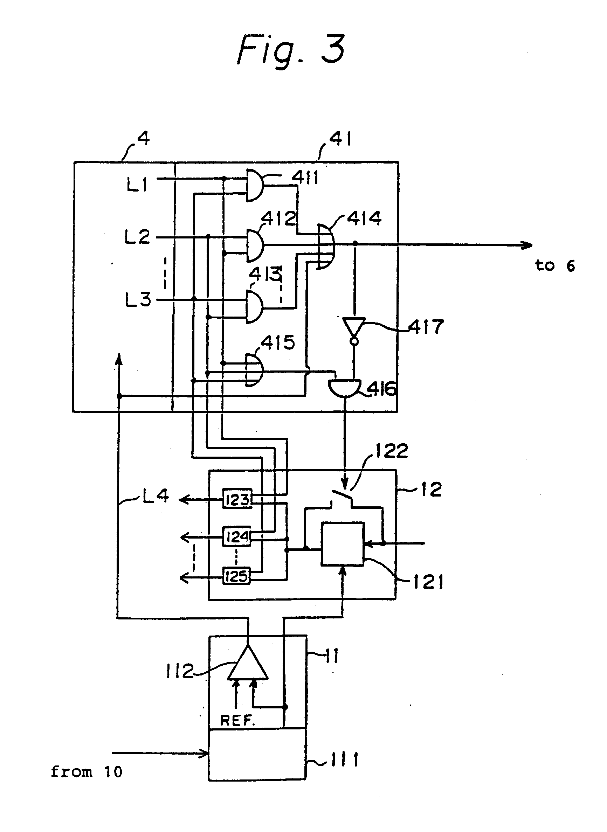

Fig. 3 is a detail circuit diagram of the failure discrimination circuit 41 and temperature monitor circuit 11. The same reference signs as are used in Fig. 2 designate the same elements. L1---L3 are failure signal leads corresponding to the signals sent from the wind sensors 3 of the cooling fans 2. Combinations of pairs of these leads are connected to the inputs of AND gates 411---413, and the outputs of these AND gates are connected to the inputs of an OR gate 414. Thereby, it can be detected when two or more cooling fans 2 are defective and the procedure for stopping apparatus operation is carried out through the delay circuit 6. Leads L1---L3 are also connected to inputs of an OR gate 415 and thereby it can be detected when at least one cooling fan has failed. When such signal and the signal obtained by inverting an output of the OR gate 414 with an invertor 417 are input to an AND gate 416, an output therefrom indicates that only one cooling fan 2 is defective and this output is input to the rotation control circuit 12. If a cooling fan uses a DC motor, the rotation control circuit 12 includes only a variable voltage generator 121, whereas if a cooling fan 2 uses an AC motor the rotation control circuit 12 includes a circuit for frequency control or conduction phase angle control. Such components are already known. In any case, if a signal is received from the failure discrimination circuit 41, the maximum rated power is applied to the cooling fans 2 in order to operate them at full speed. For example, input power is fed directly to the fans, bypassing the generator 121 with a relay 122, etc.

An output of voltage generator 121 is distributed to respective cooling fans through switches 123---125 which can be independently turned ON and OFF. The switch corresponding to a defective cooling fan is turned OFF by a signal L1---L3.

The temperature monitor circuit 11 comprises a receiving circuit 111, which receives a signal sent from the temperature sensor 10 and outputs a signal (for example, a voltage signal) proportional to temperature, and a comparator 112 which compares an output of circuit 111 with a reference value (REF) and detects when the temperature of sucked-in air is higher than a specified value. An output of the comparator 112 is sent to the failure detection circuit 4 and is also input to the OR gate 414 of the failure discrimination circuit 41, for commencement of quick stop procedures.

In the above description, a printed wiring board may constitute the apparatus 1 to be cooled, but a system in which cooling water, to be used for cooling such a printed wiring board, is cooled by air has also been employed recently.

The present invention can be adapted, of course, to an air-cooling system for cooling the cooling water to be used in such a system.

In this case, a rates of rotation of cooling fans may be controlled by measuring water temperature itself in place of measuring sucked-in air temperature with the temperature sensor 10.

When any one cooling fan stops and air migrates to the adjacent fans through such defective fan, cooling efficiency is lowered. It is thus desirable to provide a duct for each fan or to provide separation plates between respective fans in order to prevent deterioration of cooling efficiency.

As explained above, an air cooling system which controls rates of rotation of a plurality of cooling fans in the present invention, highly reliable cooling can be maintained using a simple circuit by control of the rates of rotation of non-defective cooling fans to cause them to rotate at full-speed if one or some of the cooling fans fail.

If air cooling fan rate of rotation were controlled in accordance with apparatus temperature, and if some fans failed, temperature would rise and control so carried out that rates of rotations of fans would be increased in order to compensate for the temperature rise, even if the rates of rotation of non-defective fans were not raised as in the case of the present invention.

However, sensors would have to be provided to many points of the apparatus in order to accurately measure the temperature of the apparatus itself. This is because if only one sensor were provided, there would be no problem when a fan near to the sensor happened to fail but when another fan failed, temperature rise at the area near to this fan could not be measured accurately.

Regarding this point, when temperature of sucked-in air is measured as in the case of the embodiment of the present application, fluctuation of temperature measurements resulting from different measuring positions can be neglected even when any fan fails and therefore only one sensor is sufficient and cost can also be reduced.

Moreover, if some cooling fans fail, distribution of air flow within the apparatus is altered and therefore it is dangerous to directly and continuously adopt the logic used for controlling rates of fan rotation on the basis of preconditions which apply for normal operations of all fans. It is possible to design a cooling system in which the logic of rotation control is adapted to failure of a part of the cooling fans, but the circuitry needed is complicated, resulting in increased cost.

Therefore, it is preferential in terms of cost and reliability that temperature of sucked-in air is measured, control of rate of fan rotation is provided when some cooling fans fail and the remaining fans are controlled to rotate at full-speed.

The present invention provides a distinctive effect in relation to the air cooling system for apparatus such as electronic computer which is required to have high-packing density and high reliability, or in relation to the air cooling system for means for cooling such apparatus with water.

**Claims**

1. A cooling system for electronic apparatus, comprising:-

   a plurality of cooling fans (2), for air cooling;

   a plurality of sensors (3), operable to sense failure of respective fans (2); and

   control circuitry (4, 6, 7, 11, 12), operable to turn off power supply to the electronic apparatus in response to fan failure;

   characterised in that the system further comprises,

   temperature monitoring means (10), operable to sense either:-

   (a) temperature of cooling air supplied to, or to be exhausted from, the electronic apparatus (1), when the electronic apparatus is directly air-cooled by the fans (2),

   or:-

   (b) temperature of cooling air supplied to, or to be exhausted from, water cooling means, when the electronic apparatus (1) is not directly air-cooled but is water-cooled by such water cooling means,

   or:-

   (c) temperature of water used for cooling the electronic apparatus (1), when the electronic apparatus (1) is water cooled by such water cooling means;

   rotation control circuitry (12), operable to control rates of rotation of the fans (2),

   failure discrimination circuitry (4, 41), operable to discriminate, on the basis of outputs of the sensors (3), whether or not a specified number of fans (2), or more than the specified number of fans (2), has failed;

   and characterised in that the system is operable so that,

   in normal operation, when no fan failures are sensed, the fans (2) are run at rates dependent upon the temperature sensed by the temperature sensing mans (10), whereas

   upon sensing of fan failure:-

   (i) if the specified number of fans, or more than the specified number of fans (2) are discriminated by the failure discrimination circuitry (4, 41) to have failed, the control circuitry turns off power to the electronic apparatus (1), or

   (ii) if less than the specified number of fans are discriminated to have failed by the failure discrimination circuitry, the non-failed fans are caused to operate at full speed.

2. A system as claimed in claim 1, wherein the temperature monitoring means (10) includes a comparator operable to detect when the sensed temperature exceeds a predetermined value.

3. A system as claimed in claim 1 or 2, wherein when the temperature monitoring means (10) senses a temperature exceeding a predetermined value, the control circuitry turns off power to the electronic apparatus (1).

**Patentansprüche**

1. Ein Kühlsystem für einen elektronischen Apparat mit:-

   einer Vielzahl von Kühlventilatoren (2) zur Luftkühlung;

   einer Vielzahl von Sensoren (3), die betriebsfähig sind, um einen Ausfall der entsprechenden Ventilatoren (2) zu fühlen; und

   einer Steuerschaltung (4, 6, 7, 11, 12), die betriebsfähig ist, um die Energieversorgung zu dem elektronischen Apparat ansprechend auf den Ventilatorausfall abzuschalten;

   dadurch gekennzeichnet, daß das System ferner umfaßt:

   ein Temperaturüberwachungsmittel (10), das betriebsfähig ist, um zu fühlen: entweder:-

   (a) die Temperatur der dem elektronischen Apparat (1) zugeführten oder von ihm abzuleitenden Kühlluft, wenn der elektronische Apparat durch die Ventilatoren (2) direkt luftgekühlt wird,

   oder:-

   (b) die Temperatur der dem Wasserkühlungsmittel zugeführten oder von ihm abzuleitenden Kühlluft, wenn der elektronische Apparat (1) nicht direkt luftgekühlt wird, sondern durch solch ein Wasserkühlungsmittel wassergekühlt wird,

oder:-

(c) die Temperatur des zum Kühlen des elektronischen Apparates (1) verwendeten Wassers, wenn der elektronische Apparat (1) durch solch ein Wasserkühlungsmittel wassergekühlt wird;

eine Rotationssteuerschaltung (12), die betriebsfähig ist, um die Rotationsgeschwindigkeiten der Ventilatoren (2) zu steuern,

eine Ausfallerkennungsschaltung (4, 41), die betriebsfähig ist, um auf der Grundlage von Ausgaben der Sensoren (3) zu erkennen, ob eine spezifizierte Anzahl von Ventilatoren (2) oder mehr als die spezifizierte Anzahl von Ventilatoren (2) ausgefallen ist oder nicht;

und dadurch gekennzeichnet, daß das System betriebsfähig ist, so daß,

bei Normalbetrieb, wenn keine Ventilatorausfälle gefühlt werden, die Ventilatoren (2) mit von der durch das Temperaturüberwachungsmittel (10) ermittelten Temperatur abhängigen Geschwindigkeiten laufen, wogegen

bei Fühlen von Ventilatorausfall:-

(i) wenn die spezifizierte Anzahl von Ventilatoren oder mehr als die spezifizierte Anzahl von Ventilatoren (2) durch die Ausfallerkennungsschaltung (4, 41) als ausgefallen erkannt werden, die Steuerschaltung die Energie zum elektronischen Apparat (1) abschaltet, oder

(ii) wenn weniger als die spezifizierte Anzahl von Ventilatoren durch die Ausfallerkennungsschaltung als ausgefallen erkannt werden, die nicht ausgefallenen Ventilatoren zum Betrieb bei voller Geschwindigkeit gebracht werden.

**2.** Ein System nach Anspruch 1, bei dem das Temperaturüberwachungsmittel (10) einen Vergleicher enthält, der betriebsfähig ist, um zu erfassen, wenn die gefühlte Temperatur einen vorher festgelegten Wert überschreitet.

**3.** Ein System nach Anspruch 1 oder 2, bei dem, wenn das Temperaturüberwachungsmittel (10) eine einen vorher festgelegten Wert überschreitende Temperatur fühlt, die Steuerschaltung die Energie zum elektronischen Apparat (1) abschaltet.

**Revendications**

**1.** Système de refroidissement pour dispositifs électroniques, comprenant :

une pluralité de ventilateurs (2) pour effectuer un refroidissement à air ;

une pluralité de détecteurs (3) fonctionnant pour détecter une panne des ventilateurs respectifs (2) ; et

un circuit de commande (4, 6, 7, 11, 12) fonctionnant pour couper l'alimentation du dispositif électronique en réponse à une panne de ventilateur ;

caractérisé en ce que le système comprend en outre :

un moyen de surveillance de température (10) fonctionnant pour détecter soit :

(a) la température de l'air de refroidissement qui est appliqué au dispositif électronique (1) ou qui en est évacué lorsque le dispositif électronique est directement refroidi par air par les ventilateurs (2),

soit :

(b) la température de l'air de refroidissement qui est appliqué à un moyen de refroidissement par eau ou qui en est évacué lorsque le dispositif électronique (1) n'est pas directement refroidi par air mais est refroidi par eau par ce moyen de refroidissement par eau,

soit :

(c) la température de l'eau utilisée pour refroidir le dispositif électronique (1) lorsque le dispositif électronique (1) est refroidi par eau par ce moyen de refroidissement par eau ;

un circuit de commande de rotation (12) fonctionnant pour commander les vitesses de rotation des ventilateurs (2) ;

un circuit de discrimination de panne (4, 41) fonctionnant pour discriminer, sur la base des sorties des détecteurs (3), si oui ou non un nombre spécifié de ventilateurs (2), ou si plus que le nombre spécifié de ventilateurs (2), sont tombés en panne ;

et caractérisé en ce que le système peut fonctionner de telle sorte que :

en fonctionnement normal, lorsqu'aucune panne de ventilateur n'est détectée, les ventilateurs (2) fonctionnent à des vitesses qui dépendent de la température détectée par le moyen de détection de température (10), tandis que, suite à la détection d'une panne de ventilateur :

(i) si le nombre spécifié de ventilateurs ou si plus que le nombre spécifié de ventilateurs (2) sont discriminés par le circuit de discrimination de panne (4, 41) comme étant tombés en panne, le circuit de commande coupe l'alimentation qui arrive au dispositif électronique (1), ou

(ii) si moins que le nombre spécifié de ventilateurs sont discriminés comme étant tombés en panne par le circuit de discrimination de panne, les ventilateurs non tombés en panne sont forcés à fonctionner à plein régime.

2.  Système selon la revendication 1, dans lequel le moyen de surveillance de température (10) inclut un comparateur qui peut fonctionner pour détecter lorsque la température captée excède une valeur prédéterminée.

3.  Système selon la revendication 1 ou 2, dans lequel lorsque le moyen de surveillance de température (10) capte une température qui excède une valeur prédéterminée, le circuit de commande coupe l'alimentation du dispositif électronique (1).

# Fig. 1

failure detection circuit

5

4

monitor board

2  3

1

apparatus to be cooled

ventilation air

3  2

6

delay circuit

7

power supply control circuit

# Fig. 2

failure detection circuit

failure descrimination circuit

4

41  monitor board

5

apparatus to be cooled

2  3

12  6

delay circuit

1

rotation control circuit

ventilation air

2

11

7

3  10

temperature monitor circuit

power supply control circuit

# Fig. 3